Europäisches Patentamt

European Patent Office

Office européen des brevets

(19)

(11) Publication number: **0 260 674 B1**

# EUROPEAN PATENT SPECIFICATION

(12)

(45) Date of publication of patent specification: 17.06.92   (51) Int. Cl.⁵: **B05C 5/02,** B05D 1/26, //G11B7/26

(21) Application number: 87113538.0

(22) Date of filing: 16.09.87

(54) Free surface casting method.

(30) Priority: 19.09.86 US 909181

(43) Date of publication of application:
23.03.88 Bulletin 88/12

(45) Publication of the grant of the patent:
17.06.92 Bulletin 92/25

(84) Designated Contracting States:
BE CH DE FR GB IT LI LU NL SE

(56) References cited:
EP-A- 0 072 378
EP-A- 0 138 381
US-A- 3 461 841
US-A- 4 492 718

(73) Proprietor: E.I. DU PONT DE NEMOURS AND COMPANY
1007 Market Street
Wilmington Delaware 19898(US)

(72) Inventor: Geary, James Edward, Jr.
2626 Pennington Drive
Wilmington Delaware 19810(US)
Inventor: Leffew, Kenneth Wayne
96 Deerpath Drive
Kennett Square Pennsylvania 19348(US)
Inventor: Schiff, David Robert
2921 Poplar Street
Philadelphia Pennsylvania 19130(US)
Inventor: Mules, Richard Donald
706 Halstead Road
Wilmington Delaware 19803(US)

(74) Representative: von Kreisler, Alek et al
Patentanwälte Von Kreisler-
Schönwald-Fues-Keller Selting-Werner
Deichmannhaus am Hauptbahnhof
W-5000 Köln 1(DE)

**Description**

The invention relates to a method for free surface casting film-forming liquids onto annular substrates, particularly for use in the manufacture of optical recording media, according to the first portion of claim 1 and a slot die, according to the first portion of claim 15.

Background of the Invention

In response to the demand for more reliable and higher capacity data storage and retrieval systems, there is considerable activity in the research and development of so-called optical disk recording systems. These systems utilize a highly focused modulated beam of light, such as a laser beam, which is directed onto a recording layer which is capable of absorbing a substantial amount of the light. The heat thusly produced causes the light-absorbing material in the areas struck by the highly focused laser beam to change chemically and/or physically, thus producing a concomitant change in optical properties, e.g., transmissivity or reflectivity, in the affected area. For readout, the contrast between the amount of light transmitted or reflected from the unaffected parts of the absorbing layer and from the marked areas of the layer is measured. Examples of such recording systems are disclosed throughout the literature and in numerous U.S. Patents such as U.S. 3,314,073 and 3,474,457.

In recording data, a rotating disk having a light-absorptive recording layer is exposed to modulated radiation from a laser source. This radiation is passed through a modulator and appropriate optics, and the highly focused laser beam is directed onto the disk which forms by chemical and/or physical reaction of the light-absorbing layer a series of very small marks along a spiral path within the light-absorptive layer. The frequency of the marks is determined by the modulator inputs. Using laser beams with a focused spot diameter of 1 $\mu$m or less, data can be stored at a density of $10^8$ bits/cm$^2$ or higher.

The simplest optical disk medium consists merely of a dimensionally stable solid substrate on which is coated a thin layer of light-absorptive material such as a metal layer. When the light-absorptive layer is struck by an intense beam of coherent light, such as from a laser source, the light-absorptive material is eithr vaporized and/or thermally degraded, thereby producing a very small marked area which exhibits different transmissivity or reflectivity than the adjacent unmarked area. Multilayer antireflection structures, such as those disclosed in U.S. 4,305,081 to Spong and U.S. 4,270,132 to Bell, increase the absorption of the laser beam which gives better read/write contrast than with the use of simple single layer media. Therefore, for purposes of obtaining better power efficiency, sensitivity and readout response of the record, it has been preferred to use multilayer antireflective structures.

There are two basic types of multilayer antireflective structures, one of which is basically a bilayer structure and the other a trilayer structure. In bilayer media, the substrate is coated with a very smooth, highly reflective material such as aluminum, on top of which is coated a layer of moderately light-absorptive material which is preferably of a thickness corresponding to about $\lambda/4n$, where $\lambda$ is the wavelength of the recording light source and n is the refractive index of the light-absorptive layer. In trilayer media, the substrate is likewise coated with a first layer of very smooth highly reflective material on which is coated a second layer of transparent material. Atop the transparent second layer is coated a thin third layer of strongly light-absorptive material. The combined thickness of the transparent and absorptive layers is preferably adjusted to be about $\lambda/4n$. In both types of structures, the adjustment of certain layer thicknesses according to the wavelength of light and refractive index of the layer is for the purpose of minimizing the amount of light reflected from the unmarked areas and maximizing the amount of light reflected from the marked areas, thus producing a higher playback signal amplitude. A detailed discussion of the three types of disk construction is given by A. E. Bell in Computer Design. Jan. 1983, pp. 133-146 and the references cited therein. See especially Bell and Spong, IEEE Journal of Quantum Electronics, Vol. QE-14, 1978, pp. 487-495.

It will be realized, of course, that the terms "bilayer" and "trilayer" refer only to the fundamental optical layers and do not exclude the use of ancillary layers such as a dust defocussing layer.

Ancillary layers for optical media are frequently made of polymeric materials, However, the deposition of polymer films on optical recording disks is a particularly difficult task because of the very high uniformity requirements for the surfaces of such media. Depending on the nature of the film, such layers may be applied by laying down an integral film, spin coating or spraying a thin polymer solution, in situ plasma polymerization, sputtering or by free surface casting. Each of these has its appropriate niche in the manufacture of optical recording disks. However, each has its disadvantages as well. For example, plasma polymerization and sputtering are satisfactory only for very thin coatings which do not exceed about 500 nm (5000Å) thickness. On the other hand, applying an already-formed film is not useful for films that are less

than about 500 μm thickness because of the difficulty of applying them uniformly. Spin coating is useful for certain applications however radial deviations in the thickness of the coating are a problem. Heretofore free rotational casting has not been a useful coating method for annular disks because of the difficulties (1) in applying the coating uniformly over the entire surface of the annulus and (2) in applying the coating in such fashion as to avoid a "seam" at the end of the rotation.

The invention is therefore directed to a method for rotational free casting of film-forming liquids upon annular substrates in a single pass in such manner that the seam is insignificant and to a slot die.

Summary of the Invention

The invention is directed to a method for free surface casting a thin annular layer (E) of film-forming liquid onto a substrate (1) by means of a predetermined profile of laminar flow through a dispenser while the substrate and dispense are undergoing rotation relative to each other comprising the steps of:

a. positioning the dispenser closely over the surface of the substrate;

b. beginning relative rotation of the dispenser and substrate and flow of liquid through the dispenser onto the substrate, thus forming a continuous thin film of liquid between the dispenser and the substrate

c. continuing rotation and liquid flow through a predetermined angular distance;

d. stopping liquid flow near where the liquid thin film meets the liquid layer already on the substrate; and

e. stopping rotation and breaking liquid contact between the dispenser and substrate, characterized in that the thin annular layer (E) of film forming liquid is formed in a single pass, the dispenser is a slot die (10), the flow of liquid through the slot die (10) to the substrate surface is regulated by controlling the pressure of the liquid at the outlet (22) of the slot die in synchronization with the rotational position of the substrate (1); and when the cycle cessation in step(e) occurs the bead of liquid in contact with the leading die lip is discharged onto the substrate, the flow of fluid from the die is stopped, the die is removed from fluid contact with the substrate, the coating that was placed onto the substrate at the start of the flow is overlaid with fluid at the end, and the amount of fluid remaining in the die is controlled to ensure consistent flow start-up from annular layer to annular layer.

The invention is also directed to a slot die according to claim 15.

Brief Description of the Drawings

The drawing consists of four figures:

Figure 1 is a drawing of a slot die of the type which has been found to be useful in the best mode of practicing the invention;

Figure 2 is a schematic diagram of the disk coating system for practicing the invention including the control means therefor;

Figure 3 is a graphical representation of a correlation of die pressure with the degree of rotation for the variable set points during the process; and

Figure 4 is a graphical representation of a correlation of rotation speed with the degree of rotation for the variable set points during the process.

Prior Art

U.S. 4.492.718 is directed to a method of applying a transparent acrylate prepolymer formulation to a disk substrate by applying to the rotating disk a series of either circular or spiral flowable, liquid, uniformly spaced bead segments which are allowed to spread out on the disk to form a uniform coating.

U.S. 3,461,841 is directed to an apparatus for the die extrusion of magnetic material in stripe form onto a moving substrate. The apparatus includes a reservoir for holding and supplying the fluid magnetic material to the die and a slot die having an arcuate upper face.

Detailed Description of the Invention

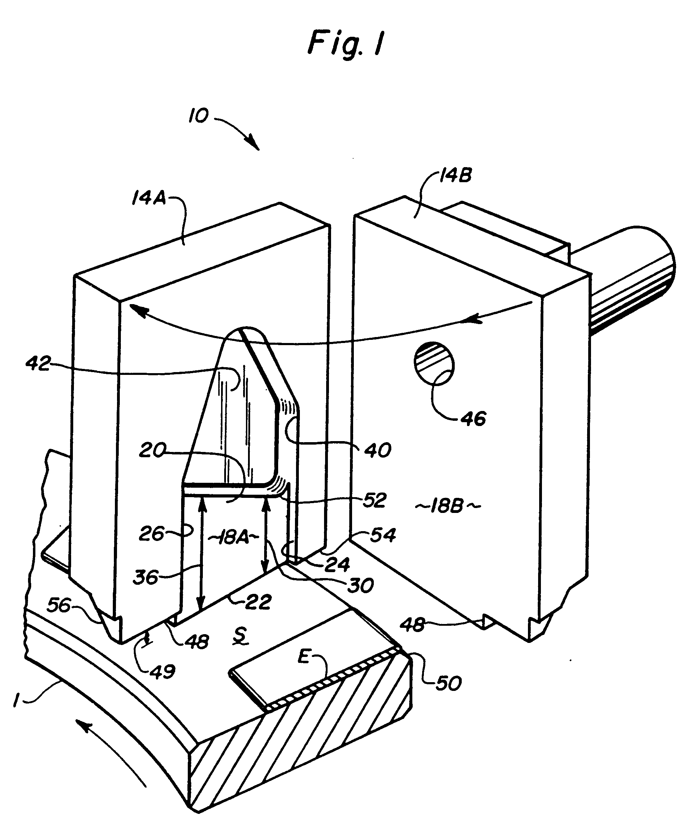

Referring to Figure 1 of the drawing, a slot die 10 is depicted which comprises a pair of die members 14A, 14B, respectively. Each die member 14A, 14B has a land surface 18A, 18B, respectively thereon.When the die members 14A, 14B are mounted in the confrontational relationship shown in the drawing, the respective land surfaces 18A, 18B cooperate to define an extrusion slot 20 having a mouth 22. The lateral width of the slot 20 is defined by a first end 24 and a second, spaced, end 26. The confronting landds 18A, 18B in the vicinity of the first end 24 of slot 20 have a first predetermined length 30 which increases as one proceeds across the confronting lands 18A, 18B toward the second end 26 of the slot. At this second end, the confronting lands 18A, 18B have a second predetermined length 36 which is greater than the first length 30. The land length need not, however, increase linearly with position across the lands.

One and/or both of the die members may be provided with a recess 40 therein which, when the dies are mounted together, defines therebetween a pressure distributing zone 42. The zone 42 communicates with the slot 20 throughout its lateral extent. The zone 42 also communicates via an inlet channel 46 with a source of film-forming material to be extruded through the slot 20 onto a substrate.

Due to the increasing length of the slot as one proceeds along the slot from the first end to the second end, a predetermined extrudate flow profile is defined across the length of the slot upon application of a predetermined input pressure. As mentioned above, the rate of the increase in slot length from 30 to 36 may be nonlinear in order to produce a selected flow profile across the slot. At the lateral ends of the slot, such as at 52, the slot length may be increased locally as shown to compensate for lateral spreading of the liquid as it emerges from the die mouth 22.

The undersurfaces of the die surrounding the die mouth 22 are designed to minimize fluid accumulation on the die surfaces and to prevent uncontrolled spreading of the fluid as it leaves the mouth. The two surfaces 48, 54 adjacent the long axis of the mouth are narrow, about 10 mils (250 $\mu$m) wide, to minimize the horizontal surface area that fluid can stick to. Surface 54 adjacent the short axis of die mouth 22 and the outer edge of the substrate can continue horizontal since the chamfered edge 50 of the substrate prevents capillary type spreading of the fluid at this location. At the opposite end of die mouth 22, where the substrate continues horizontally, the surface 48 of the die is stepped up by a predetermined distance 49 on the order of 20 mils (250-500 $\mu$m) to increase the gap between the die and the substrate, stop fluid spread and thus define the annular radius which is to be coated. To prevent excess flow out the side of the mouth at the step, a nonwettable coating such as Teflon® fluoropolymer resin is applied to the step. Without the increased gap, the Teflon® coating by itself does not adequately control spreading. Alternatively, the substrate could contain a step down and the die surface could continue horizontal.

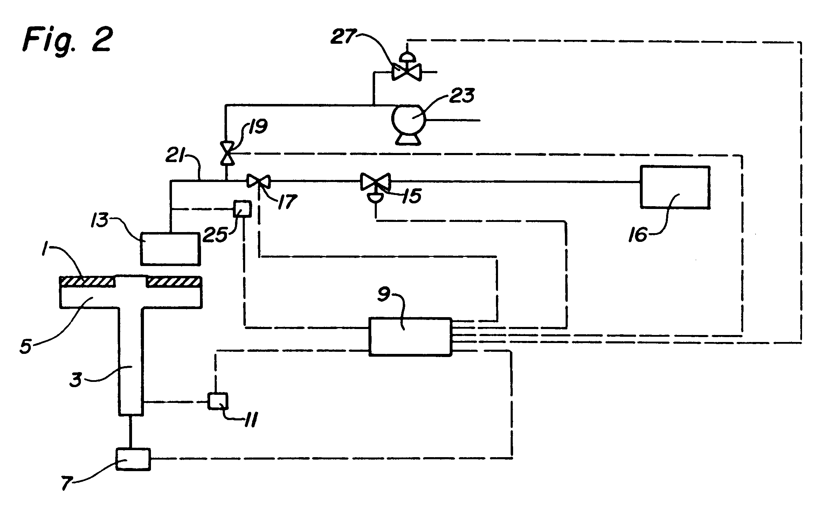

Figure 2 of the drawings illustrates schematically the flow and control apparatus for carrying out the method of the invention and its operating inter-relationships.

An annular substrate 1 of aluminum coated with a thin planarizing layer of polymer plus any additional thin layers is placed on rotatable spindle 3. Spindle 3 is comprised of a positioning table 5 which is driven by motor drive 7. The substrate is firmly held to the positioning table by vacuum. Motor drive 7 receives commands from pressure and rotation controller 9 which, in turn, receives spindle speed and rotational positional information from rotation transducer 11. The process control strategy is regulated by a predetermined program which is effected by controller 9 via manipulation of spindle motor 7, flow solenoid valve 17, flow control valve 15, vacuum solenoid valve 19, vacuum control valve 27, and feedback of process information through rotational transducer 11 and pressure transducer 25.

To initiate the medium coating process for a 7 mil (175 $\mu$m) coating, slot die 10 is positioned closely above the annular substrate surface with the long axis of the slot situated radially with respect to the annular substrate 1. The position of slot die 10 must, of course, be such that the distance between its mouth and the underlying medium are uniform over the annulus of the medium. The preferred coating position is 10 to 18 mils (250 to 450 $\mu$m) clearance between the outlet of the slot die and the substrate surface which is to be coated with liquid. Proper film formation as the fluid monomer leaves the die and contacts the substrate is obtained by precise placement of the die relative to the substrate in the coating mode. Improved seam formation is obtained by coating the trailing die lip 56 (14A in Fig. 1) with a nonwetting organic material, such as Teflon® fluorocarbon resin. Other materials having a low surface energy can also be used.

The inner end of each of die members 14A and 14B is vertically stepped, or offset, as at 48, thereby to define a clearance distance 49 between the undersurface of the die members 14A and 14B and substrate S. Increasing the clearance distance 49 helps to reduce spreading of the extrudate being layered onto the substrate S from beneath step 48. Although the undersurface of the step 48 is shown in the figure as being parallel to the substrate S it should be understood that the step may also be inclined with respect to the surface S. Of course, the alternative is true as well. That is, the substrate S may itself be stepped or beveled, as the case may be, to define the relative clearance distance between the die members 14A, 14B and the substrate S. This is exemplified as at 50 in Figure 1. The clearance distance, however defined serves to minimize accumulation of fluid extrudate on the surface of the substrate S and to prevent uncontrolled spreading of the extrudate as it leaves the mouth 22 of slot 20. A nonwetting coating, as described above, may be applied to the surface of each step 48 to improve its function. Typically, the clearance distance 49 is, at a minimum 10-20 mils (250-500 $\mu$m). The inner, trailing edges such as 56 of the die members 14A, 14B are preferably chamfered to further minimize the spread of fluid after coating is stopped.

4

It is preferred that the slot die 10 have the following elements of design:

1. The land area of the die is such that the proper volume of monomer is applied across the disk diameter while the substrate is rotating under the die to compensate for both the effect of radius on lineal velocity of the substrate and for the radial flow of fluid which occurs after application due to centrifugal force.

2. Specific areas of the underside and trailing edge 56 of the die are coated with Teflon® fluoropolymer resin or other nonwetting resin to achieve control of the inside and outside diameters of the coating and to preclude the fluid's trailing the die during the coating operation.

3. The die is designed to provide pressure drop due to flow of monomer during the coating cycle which is controllable (in the range of 20 to 60 psia or 1.4-4.2 kg/cm$^2$) at a die land spacing of 3 to 4 mils (75-100 $\mu$m).

The flow of coating liquid to the substrate surface is regulated by controlling the pressure of the liquid at the outlet of slot die 13 in synchronization with the rotational position of the spindle 5. Pressure (and thus liquid flow) is regulated by means of a pressure control valve (PCV) 15 on the outlet of feed reservoir 16 which is manipulated by a digital adaptive control algorithm responding to errors between the observed pressure and the pressure setpoint. During the start of the coating, the pressure is ramped up in a prescribed fashion. Spindle speed is controlled simultaneously to achieve the desired coating thickness through the entire rotation of the disk.

As one complete revolution of the disk nears, the pressure setpoint ramps down and the pressure-supplied flow is shut off by pressure on-off valve 17 while a second on-off valve 19 opens allowing the flow line 21 and die to be subjected to vacuum from vacuum pump 23, resulting in a decrease of pressure at the die. The die pressure decreases to just below atmospheric, which initiates reverse flow of liquid, thus precluding any further flow through the die. After achieving flow stoppage the pressure setpoint is increased to a level which maintains a desired fluid head in the die. This procedure ensures that flow control during the start of coating from disk to disk will be consistent. At a prescribed point near the end of the cycle, the table is stopped, and the die is lifted from the coating position thereby breaking liquid contact between the die and substrate. The coating arm is removed from over the disk and the applied layer may then be allowed to settle (planarize) for a short time before initiation of curing. A settling time of 60-300 seconds before curing is typical.

The curing process involves photohardening of the applied liquid layer, which typically consists of enclosing the substrate with a transparent covering and exposing the wet coating to a point source of UV radiation for from 10 to 60 seconds.

A preferred method for practicing the invention involves the sequential steps of:

a. positioning the slot die closely over the surface of the substrate;

b. simultaneously beginning relative rotation of the slot die and substrate and low flow of liquid through the die slot, thus forming a continuous thin film of liquid between the slot and the substrate, and accelerating both the rotation and the flow so that both reach a preselected operating rate within a first predetermined angular distance;

c. continuing rotation and liquid flow at the preselected operating rates through a second predetermined angular distance;

d. simultaneously changing the rotation speed to a higher or lower constant rate and reducing the liquid flow to zero within a third predetermined angular distance;

e. initiating reverse flow of film-forming liquid through the die;

f. simultaneously stopping rotation and rapidly removing the slot die away from the surface of the substrate before it completely retraverses the first predetermined angular distance; and

g. stopping reverse flow of film-forming liquid.

The annular liquid layer cast by the process of this invention is typically cured to form a solid layer by any of the known curing processes. Such curing processes include evaporation of solvent from solutions of film forming composition, thermally or photolytically hardening solvent-free liquid composition by polymerization and/or crosslinking mechanisms, chemically hardening multi-component liquid compositions, etc. Particularly preferred liquids are the photohardenable liquids disclosed in assignee's co-pending applications U.S. Serial No. 760,946 and U.S. Serial No. 760,947 both filed on July 31, 1985.

The above-described process involves a large number of parameters as follows:

## Table 1
### PARAMETER LIST

### Pressure Profile

1. Position of disk at start of pressure ramp-up (degrees)
2. Rotation of disk during pressure ramp-up (degrees)
3. Maximum Coating Pressure (psia , $(kg/cm^2)$)
4. Position of disk at start of pressure ramp-down (degrees)
5. Rotation of disk during pressure ramp-down (degrees)
6. Coating pressure at end of ramp-down (psia , $(kg/cm^2)$)
7. Minimum pressure during vacuum application (psia $(kg/cm^2)$)
8. Position of disk at switch to vacuum (degrees)
9. Time from die lift to minimum pressure (sec)
10. Pressure at vacuum solenoid closure (psia, $(kg/cm^2)$)
11. Hold pressure at end of vacuum application (psia , $(kg/cm^2)$)

### Rotation Profile

12. Velocity at beginning of cycle (RPM)
13. Position of disk at start of acceleration (degrees)
14. Rotation of disk during acceleration (degrees)
15. Velocity during coating (RPM)
16. Position of disk at start of acceleration at end of cycle (degrees)
17. Rotation during acceleration at end of cycle (degrees)
18. Velocity after acceleration at end of cycle (RPM)
19. Position of disk at die lift (degrees)
20. Position of disk at stop of rotation (degrees)

## Die Positioning Parameters

**21. Acceleration of die during lift (in/sec/sec.; (2.54cm/sec/sec ))**

**22. Final velocity of die during lift (in/sec. (2.54 cm/sec /sec ))**

## Miscellaneous Parameters

**23. Die Height (mils. (μm))**

**24. Levelling time (sec)**

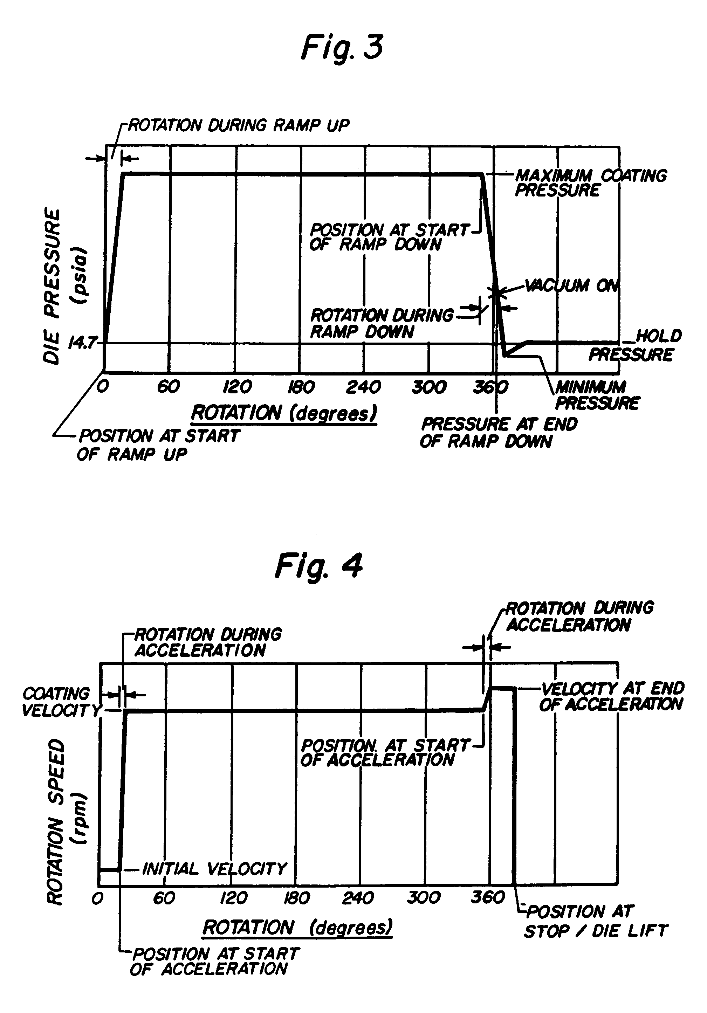

This large number of parameters has evolved from the need very precisely to control the relative coating pressure and rotational speed of the table. In fact, it has been found that the best means to regulate this process is based on a closed loop control strategy which correlates both the slot die pressure and the rotational speed with rotational position of the disk. The quality of the coating in terms of optical flatness has been found to be significantly affected by the selection of the relative setpoint profiles of coating pressure and rotational speed. The general form of a particular correlation which has proven to produce acceptable coatings is given in Figures 3 and 4 and the importance of various elements of the Parameter List above will be illustrated in the Examples.

EXAMPLES

Six annular substrate disks were coated by the process of the invention to form a uniformly smooth coating of film-forming liquid, which was subsequently cured by exposure to a source of ultraviolet light. In these examples, three different coating liquids were applied by the process of the invention (noted by the different fluid viscosities in Table 3). The application process was adjusted by means of the control parameters listed in the Parameter List, above, to achieve uniformly flat coatings (within the tolerances required of the optical disk media) in each case.

We have found that some of the elements in the above-referred Parameter List may be held constant without significantly affecting the performance of the process, when coating thicknesses of nominally 5 to 10 mils (125-250 μm). For example, the die positioning constants determine the rate at which the die is removed from the vicinity of the disk at the end of the coating cycle, which affects the thickness of the coating in the area where the die is lifted. However, we have found that other parameters in the coating process dominate the coating uniformity and that the rate at which the die lifts should be regulated, but need not be adjusted during coating. In addition, the gap between the die and the disk in the coating mode affects the size of the fluid bead which is formed on the leading die lip. Again, however, by keeping the die gap constant, other coating parameters may be more conveniently changed to affect the size of the bead.

Consequently, for these examples, Table 2 illutrates those parameters which were fixed. The method of this invention does not require these parameters to be constant, but a best mode of operation for a 7 mil (175 μm) coating is illustrated by keeping them constant.

Start of Flow

By setting both the position of the disk at the start of the pressure ramp-up and the rotation during ramp-up at 0 degrees, the pressure setpoint at the beginning of the cycle is a stepchange from the hold pressure to the maximum coating pressure. The adaptive design of the pressure controller. 9 provides a reproducible closed-loop response to this setpoint stepchange, independent of changes in the fluid or die. By fixing the pressure ramp-up in this manner, the flow rate of liquid through the die during the start of flow to the disk is consistently the same from run to run. Then, since the table rotational speeds at the beginning and during the coating stage of the process are fixed, the nature of the coating at the start of rotation is controlled by adjusting when rotational ramp-up is started (parameter 13) and the rotation over which the ramp-up to the coating speed occurs (parameter 14). Changes in these parameters affect the size of the bead which is formed on the leading die lip and the shape of the coating which is applied to the disk at the start of flow.

Coating

Since most of the rotation takes place at a fixed rotational speed, the thickness obtained is determined by the flow rate of liquid to the disk, which is directly proportional to the pressure drop through the die (parameter 3). The required pressure drop to obtain a specified thickness will also increase as the slot width decreases and as the liquid viscosity increases.

Cessation of Flow

At the end of the cycle, several steps must occur to give a uniform coating thickness: the bead of liquid in contact with the leading die lip must be discharged onto the disk, the flow of fluid from the die must be stopped, the die must be removed from fluid contact with the disk, the coating that was placed onto the disk at the start of flow must be overlaid with fluid at the end, and the amount of fluid remaining in the die must be controlled to ensure that the flow start-up from disk to disk will be consistent. The process of this invention accomplishes each of these steps by controlling the pressure drop across the die in conjunction with the rotating speed of the table.

As the end of the cycle approaches, the pressure setpoint is ramped down from the maximum coating pressure to nearly atmospheric over a fixed rotation of the disk. The pressure controller 9 attempts to follow this setpoint by closing the automatic valve in the flow line thus cutting off the supply pressure to the die. However, because of fluid momentum within the line, the flow of fluid continues. At a prescribed rotation of the disk, the two solenoid valves switch, cutting off completely the pressure supply to the die and opening the flow line to the vacuum source. Pressure control is now accomplished through manipulation of an automatic valve in the vacuum line until the flow exiting the die stops and flow reverses in the die. To accommodate the bead of fluid which is in contact with the leading edge of the die, the table accelerates at a prescribed rotation. Finally, the table stops and the die lifts thus breaking fluid contact with the disk. The pressure within the die is controlled to a prescribed value to ensure that the liquid level within the die is regulated.

The preferred coating process can be better understood by considering in detail the operation described for Example 1 in Table 3 and with reference to Figures 3 and 4. The specific steps illustrated by Table 3 are the following:

1. An annular substrate is loaded onto the spindle and the die is lowered to place it 15 mils (375 $\mu$m) above the disk surface in a radial position that will result in the annulus being coated with fluid.

2. Begin rotation of the spindle at 0.01 rpm.

3. Open the flow solenoid valve, 17. This action resets the rotation counter to 0 degrees and begins the cycle.

4. At the instant that the valve 17 opens, the pressure setpoint is increased from the hold pressure of 15.3 psia (1.08 kg/cm$^2$) to the regulated coating pressure of 46 psia (3.23 kg/cm$^2$). The closed-loop control system will now drive the pressure to the setpoint in a prescribed fashion dictated by the adaptive tuning constants of the pressure and controller 9.

5. When the rotation counter reaches 0.012 degrees the speed setpoint is linearly ramped to 5 rpm over 35 degrees of rotation by rotation controller 9.

6. The pressure remains at 46 psia (3.23 kg/cm$^2$) and the table speed remains at 5 rpm for the bulk of the coating.

7. When the rotation counter reaches 348.5 degrees (13 degrees before the position at which the table will stop) the pressure setpoint is ramped down over 5 degrees of rotation from 46 psia (3.23 kg/cm$^2$) to 14.8 psia (1.04 kg/cm$^2$). The pressure controller 9 will now decrease the delivery pressure by throttling of the automatic valve, 15.

8. When the rotation counter reaches 350 degrees (11.5 degrees before the position at which the table will stop), flow solenoid valve, 17, is closed (cutting off the supply pressure from the die) and vacuum solenoid valve, 19, is simultaneously opened.

9. The pressure setpoint ramp during vacuum application is calculated by the following relationship:

$$\text{Vacuum Ramp} = \frac{\text{(pressure at switch to vacuum-minimum pressure)}}{\text{(time from switch to vacuum to die lift+time from die lift to minimum pressure)}}$$

The pressure controller during this stage of the operation attempts to maintain the setpoint by manipulation of the vacuum control valve, 27.

10. When the rotation counter reaches 351.5 degrees (10 degrees before the position at which the table will stop), the speed of the table is ramped from 5 rpm to 7 rpm over 5 degrees of rotation by rotation controller 9.

11. When the pressure at the die reaches 15.6 psia (1.09 kg/cm$^2$), the vacuum solenoid valve, 17, is closed. The die pressure continues to decrease for a short period and is controlled at 15.3 psia (1.075 kg/cm$^2$).

12. When the rotation counter reaches 361.5 degrees the table rotation stops and the die is simultaneously lifted to break fluid contact with the disk.

13. The die is removed from the vicinity of the disk, the disk is covered with a transparent cover and the space above the disk is swept with nitrogen. The fluid is allowed to stand on the disk until 300 seconds after the time that the die lifted. During this levelling period, the table may be rotated at a slow speed (preferably 1 rpm or less) to negate the effects of gravity in the event the coating table is leveled imperfectly. The liquid is then exposed to ultraviolet light to harden the material to a hard, clear coating.

After the coated layers of the examples had leveled for the prescribed period of time, they were photolytically cured. In this procedure, air over the coated disk was displaced with a nitrogen blanket and the disk was uniformly expsed for 20 seconds in a Fusion Products Areal Exposure Ultra Violet point source at a surface intensity of 18 megawatts/cm.

In Example 1, the resultant coating weighed 15.9 grams and had an average thickness of 6.8 mils (170 μm) with a peak-to-peak variation in thickness over the coated region of 0.9 mils (22.5 μm).

The results of the other five examples given in Table 3 illustrate that various fluid viscosities and process parameters may be used with the process of the invention to give uniformly flat coatings.

## Table 2

### FIXED PROCESS PARAMETERS FOR EXAMPLES

#### Pressure Profile

1. Position of disk at start of pressure ramp-up (degrees) — 0.0

2. Rotation of disk during pressure ramp-up (degrees) — 0.0

5. Rotation of disk during pressure ramp-down (degrees) — 5.0

6. Coating pressure at end of ramp-down (psia) — 14.8 $(1.04 \, kg/cm^2)$

7. Minimum pressure during vacuum application (psia) — 13.0 $(0.91 \, kg/cm^2)$

#### Rotation Profile

12. Velocity at beginning of cycle (RPM) — 0.01

15. Velocity during coating (RPM) — 5.0

17. Rotation during acceleration at end of cycle (degrees) — 5.0

#### Die Positioning Parameters

21. Acceleration of die during lift (in/sec/sec) — 1.0 $(2.54 \, cm/sec/sec)$

22. Final velocity of die during lift (in/sec) — 1.0 $(2.54 \, cm/sec/sec)$

#### Miscellaneous Parameters

23. Die Height (mils) — 15 $(381 \, \mu m)$

10

## Table 3

### COATING PARAMETERS FOR EXAMPLES

| EXAMPLE | 1 | 2 | 3 |
|---|---|---|---|
| Fluid viscosity at 20°C (cps; mPas) | 23 | 23 | 10 |
| **Pressure Profile** | | | |
| 3. Maximum Coating Pressure (psia) (kg/cm²) | 46 (3.23) | 46 (3.23) | 23 (1.65) |
| 4. Position of disk at start of pressure ramp-down (degrees) | 348.50 | 349.00 | 346.50 |
| 8. Position of disk at switch to vacuum (degrees) | 350.00 | 350.50 | 348.00 |
| 9. Time from die lift to minimum pressure (sec) | 0.5 | 0.5 | 0.5 |
| 10. Pressure at vacuum solenoid closure (psia) (kg/cm²) | 15.6 (1.09) | 15.7 (1.1) | 15.4 (1.08) |
| 11. Hold pressure at end of vacuum application (psia) (kg/cm²) | 15.3 (1.07) | 15.3 (1.07) | 15.3 (1.07) |
| **Rotation Profile** | | | |
| 13. Position of disk at start of acceleration (degrees) | 0.012 | 0.010 | 0.008 |
| 14. Rotation of disk during acceleration (degrees) | 35 | 35 | 25 |
| 16. Position of disk at start of acceleration at end of cycle (degrees) | 351.50 | 352.00 | 353.00 |
| 18. Velocity after acceleration at end of cycle (RPM) | 7 | 7 | 7 |
| 19. Position of disk at die lift (degrees) | 361.50 | 362.00 | 363.00 |
| 20. Position of disk at stop of rotation (degrees) | 361.50 | 362.00 | 363.00 |
| **Miscellaneous Parameters** | | | |
| 24. Levelling time (sec) | 300 | 300 | 60 |
| **Coating Results** | | | |
| Coating weight (g) | 15.9 | 16.1 | 15.3 |
| Coating thickness Average (mils) (µm) | 6.8 (172.7) | 6.8 (172.7) | 6.5 (165.1) |
| Peak-to-Peak Variability (mils)(µm) | 0.9 (22.9) | 1.1 (27.9) | 1.0 (25.4) |

EP 0 260 674 B1

## Table 3 (continued)

### COATING PARAMETERS FOR EXAMPLES

| EXAMPLE | 4 | 5 | 6 |
|---|---|---|---|
| Fluid viscosity at 20°C (cps / mPas) | 10 | 15 | 15 |
| **Pressure Profile** | | | |
| 3. Maximum Coating Pressure (psia) (kg/cm²) | 23 (1.62) | 40.3 (2.83) | 35 (2.46) |
| 4. Position of disk at start of pressure ramp-down (degrees) | 346.50 | 347.75 | 351.50 |
| 8. Position of disk at switch to vacuum (degrees) | 348.00 | 354.25 | 353.00 |
| 9. Time from die lift to minimum pressure (sec) | 0.5 | 0.15 | 0.15 |
| 10. Pressure at vacuum solenoid closure (psia) (kg/cm²) | 15.4 (1.08) | 15.5 (1.09) | 15.8 (1.11) |
| 11. Hold pressure at end of vacuum application (psia) (kg/cm²) | 15.3 (1.07) | 15.3 (1.07) | 15.3 (1.07) |
| **Rotation Profile** | | | |
| 13. Position of disk at start of acceleration (degrees) | 0.008 | 0.049 | 0.049 |
| 14. Rotation of disk during acceleration (degrees) | 25 | 20 | 20 |
| 16. Position of disk at start of acceleration at end of cycle (degrees) | 353.00 | 349.25 | 353.00 |
| 18. Velocity after acceleration at end of cycle (RPM) | 7 | 7 | 6 |
| 19. Position of disk at die lift (degrees) | 363.00 | 361.75 | 360.50 |
| 20. Position of disk at stop of rotation (degrees) | 363.00 | 361.75 | 360.50 |
| **Miscellaneous Parameters** | | | |
| 24. Levelling time (sec) | 180 | 120 | 240 |
| **Coating Results** | | | |
| Coating weight (g) | 15.6 | 15.2 | 14.1 |
| Coating thickness Average (mils) (μm) | 6.6 (167.6) | 8.8 (223.5) | 7.9 (200.7) |
| Peak-to-Peak Variability (mils) (μm) | 0.8 (20.3) | 0.7 (17.8) | 0.2 (5.1) |

Each of the above-described coatings was levelled and cured by exposure to UV radiation. The composition of the coating formulations, curing times and curing properties are given in Table 4 below:

12

## Table 4

### COMPOSITION AND PROPERTIES
### OF PLANARIZED COATINGS

| Example | 1 | 2 | 3 |
|---|---|---|---|
| **Chemical Composition** | | | |
| Cyclohexyl acrylate | – | – | 87.3 |
| Triethyleneglycol diacrylate | 86.9 | 86.5 | – |
| Celrad® 7100[1] | 10.6 | 10.6 | – |
| Celrad® 3600[1] | – | – | 8.7 |
| Irgacure® 651[2] | 2.5 | 2.5 | 3.0 |
| Fluorad® FC430[3] | 1.0 | 1.0 | 1.0 |
| **Coating Treatment** | | | |
| Leveling time, sec. | 300 | 300 | 60 |
| Radiation time, sec. | 20 | 20 | 20 |
| **Coating Properties** | | | |
| Weight, g | 15.9 | 16.1 | 15.3 |
| Actual thickness, mils ($\mu m$) | 6.8 (172.7) | 6.8 (172.7) | 6.5 (165.1) |
| Peak-to-peak variability, mils ($\mu m$) | 0.9 (22.9) | 1.1 (27.9) | 1.0 (25.4) |

(1) Celrad® is a registered trademark of Celanese Corporation, New York, New York for acrylated epoxy urethane and acrylate oligomers

(2) Irgacure® is a registered trademark of C. B. Gigy Corporation, Ardsley, New York for $\alpha,\alpha$-dimethoxy-$\alpha$-phenolacetalphenone

(3) Fluorad® is a registered trademark of 3M Corporation, St. Paul, Minnesota, for fluorinated acrylate ester oligomers.

EP 0 260 674 B1

## Table 4 (continued)

| Example | 4 | 5 | 6 |
|---|---|---|---|
| **Chemical Composition** | | | |
| Cyclohexyl acrylate | 87.3 | 76.2 | 76.2 |
| Triethyleneglycol diacrylate | – | – | – |
| Celrad® 7100[1] | – | – | – |
| Celrad® 3600[1] | 8.7 | 20.0 | 20.0 |
| Irgacure® 651[2] | 3.0 | 2.8 | 2.8 |
| Fluorad® FC430[3] | 1.0 | 1.0 | 1.0 |
| **Coating Treatment** | | | |
| Leveling time, sec. | 180 | 120 | 240 |
| Radiation time, sec. | 20 | 20 | 20 |
| **Coating Properties** | | | |
| Weight, g | 15.6 | 15.2 | 14.1 |
| Actual thickness, mils ($\mu$m) | 6.6 (167.6) | 8.8 (223.5) | 7.9 (200.67) |
| Peak-to-peak variability, mils ($\mu$m) | 0.8 (20.3) | 0.7 (17.8) | 0.2 (5.1) |

## Claims

1. A method for free surface casting a thin annular layer (E) of film-forming liquid onto a substrate (1) by means of a predetermined profile of laminar flow through a dispenser while the substrate and dispense are undergoing rotation relative to each other comprising the steps of:

   a. positioning the dispenser closely over the surface of the substrate;

   b. beginning relative rotation of the dispenser and substrate and flow of liquid through the dispenser onto the substrate, thus forming a continuous thin film of liquid between the dispenser and the substrate

   c. continuing rotation and liquid flow through a predetermined angular distance;

   d. stopping liquid flow near where the liquid thin film meets the liquid layer already on the substrate; and

   e. stopping rotation and breaking liquid contact between the dispenser and substrate, characterized in that the thin annular layer (E) of film forming liquid is formed in a single pass, the dispenser is a slot die (10), the flow of liquid through the slot die (10) to the substrate surface is regulated by controlling the pressure of the liquid at the outlet (22) of the slot die in synchronization with the rotational position of the substrate (1); and when the cycle cessation in step(e) occurs the bead of liquid in contact with the leading die lip is discharged onto the substrate, the flow of fluid from the die is stopped, the die is removed from fluid contact with the substrate, the coating that was placed onto the substrate at the start of the flow is overlaid with fluid at the end, and the amount of fluid remaining in the die is controlled to ensure consistent flow start-up from annular layer to annular layer.

14

**2.** The method of claim 1 further characterized in that in step (b), the relative rotation of the slot die (10) and substrate (1), and flow of liquid through the die slot are begun simultaneously; and, the rotation is accelerated and liquid flow is increased to a preselected operating rate within a first predetermined angular distance,

in step (c), the rotation and liquid flow are continued at preselected operating rates through a second predetermined angular distance,

in step (d), the rotation speed is changed to a higher or lower constant rate simultaneously with a reduction of the liquid flow to zero within a third predetermined angular distance to thereby stop liquid flow, then reverse flow of film - forming liquid through the die is initiated,

in step (e), rotation is stopped simultaneously with the breaking of liquid contact between the die (10) and substrate (1); the liquid contact is broken by rapidly removing the slot die (10) away from the surface of the substrate(s) before it completely retraverses the first predetermined angular distance; and then the reverse flow of film-forming liquid is stopped.

**3.** The method of claim 2 in which the slot die (10) is comprised of a pair of confronting die members (14A, 14B) cooperating to define a pressure distribution zone (42) communicating with an extrusion slot (20) having spaced first (26) and second (24) ends terminating in a mouth (22) the length of the slot at the first end (36) being greater than the length of the slot at the second end (30) so that a predetermined flow profile is defined across the mouth of the slot from the first to the second end of the slot upon application of a given input pressure to flowable liquid filling the extrusion slot.

**4.** The method of claim 1 in which the slot die (10) is rotated relative to the stationary substrate.

**5.** The method of claim 1 in which the substrate (1) is rotated relative to the stationary slot die (10).

**6.** The method of claim 1 in which the trailing edge (56) of the slot die (10) is coated with an organic material which is not wetted by the film-forming liquid.

**7.** The method of claim 1 in which the flow of liquid through the die (10) is progressively higher toward the outer edge of the annular layer (E).

**8.** The method of claim 7 in which the variation in flow through the die (10) is effected by the use of a land (18A) having progressively decreasing length toward the outer edge of the slot die relative to the annular layer (E).

**9.** The method of claim 2 in which the liquid flow rate is regulated by closed loop control of the liquid pressure at the slot die (13) and the rotation speed is regulated by closed loop control of the substrate (1) position.

**10.** The method of claim 10 in which the set points of both the pressure and rotation speed controllers (9) are determined independently by the position of the substrate.

**11.** The method of claim 2 in which the fluid head in the slot die at the conclusion of the coating cycle is regulated by means of closed loop control of the liquid pressure.

**12.** The method of claim 1 in which the film-forming liquid is a heat-crosslinkable polymeric material which is leveled by standing and then crosslinked by heating or photohardening.

**13.** The method of claim 1 further comprising the step of controlling the spread of liquid at the inner and outer edges of the annular layer by a continuous interruption (50, 48) at said edges of either a planar surface defined by the substrate or a planar surface on the die parallel to the substrate planar surface adjacent to the die slot.

**14.** The method of claim 1 in which the clearance distance (49) between the slot die undersurface and the substrate from the inner and outer edges of the annular layer is greater than the clearance distance over the coating area in order to reduce spreading of the coating liquid at the inner and outer edges of the annular coating layer (E)

EP 0 260 674 B1

**15.** A slot die (10) comprising a pair of confronting members cooperating to define a zone communicating with an extrusion slot having spaced first and second ends terminating in a mouth, characterized in that the zone is a pressure distribution zone (42) and the length of the extrusion slot at the first end (36) is greater than the length of the slot at the second end (24) so that a predetermined flow profile is defined across the mouth of the slot (22) from the first to the second end of the slot upon application of a given input pressure to flowable liquid filling the extrusion slot.

**Revendications**

**1.** Un procédé de coulage sur surface libre, d'une mince couche annulaire (E) constituée de liquide formant un film, sur un substrat (1), à l'aide d'un profil prédéterminé d'écoulement laminaire à travers un distributeur, tandis que le substrat et le distributeur tournent l'un par rapport à l'autre, comprenant les étapes de:

a) positionnement du distributeur, de façon proche, au-dessus de la surface du substrat;

b) commencement de la rotation relative du distributeur et du substrat et écoulement du liquide à travers le distributeur, pour aller sur le substrat, en formant ainsi un film mince continu de liquide, entre le distributeur et le substrat;

c) poursuite de la rotation et de l'écoulement de liquide, sur une distance angulaire prédéterminée;

d) arrêt de l'écoulement de liquide, près de l'emplacement où le film mince de liquide entre en contact avec la couche de liquide, déjà située sur le substrat; et

e) arrêt de la rotation et interruption du contact de liquide entre le distributeur et le substrat,

caractérisé en ce que la mince couche annulaire (E) en liquide formant un film est formée en un unique passage, le distributeur est une matrice à fente (10), l'écoulement de liquide à travers la matrice à fente (10), vers la surface de substrat, est ajusté en contrôlant la pression du liquide, à la sortie (22) de la matrice à fente, en synchronisation avec la position de rotation du substrat (1); et lorsque se produit l'arrêt du cycle, à l'étape (e), la goutte de liquide en contact avec le bec de matrice avant est déchargée sur le substrat, l'écoulement de fluide à partir de la matrice est arrêté, la matrice est placée hors de contact hydraulique avec le substrat, le revêtement qui a été placé sur le substrat, au commencement de l'écoulement, est recouvert avec du fluide à la fin du processus, et la quantité de fluide restant dans la matrice est contrôlée, de façon à assurer une amorce consistante de l'écoulement, d'une couche annulaire à l'autre.

**2.** Le procédé selon la revendication 1, caractérisé en outre en ce qu'à l'étape (b), la rotation relative de la matrice à fente (10) et du substrat (1) et l'écoulement de liquide à travers la lente de matrice sont commencés simultanément; et, la rotation est accélérée et l'écoulement de liquide est augmenté jusqu'à une valeur fonctionnelle présélectionnée, dans les limites d'une première distance angulaire prédéterminée,

en ce qu'à l'étape (c), la rotation et l'écoulement de liquide sont continués à des valeurs fonctionnelles présélectionnées, sur une seconde distance angulaire prédéterminée,

en ce qu'à l'étape (d), la vitesse de rotation est changée pour une vitesse constante supérieure ou inférieure, simultanément à une réduction de l'écoulement de liquide jusqu'à la valeur zéro, sur une troisième distance angulaire prédéterminée, de façon à stopper l'écoulement de liquide et à commencer ensuite un écoulement inverse de liquide formant un film, à travers la matrice,

en ce qu'à l'étape (e), la rotation est arrêtée simultanément avec l'interruption du contact hydraulique entre la matrice (10) et le substrat (1); le contact hydraulique est interrompu en écartant rapidement la matrice à fente (10) de la surface du(des) substrat(s), avant qu'il ne parcoure de nouveau la première distance angulaire prédéterminée; et, ensuite, l'écoulement inverse du liquide formant un film est arrêté.

**3.** Le procédé selon la revendication 2, dans lequel la matrice à lente (10) est constituée d'un couple d'organes de matrice (14A, 14B) se faisant face, coopérant pour définir une zone de distribution de pression (42), communiquant avec une lente d'extrusion (20) dotée d'une première (26) et d'une seconde (24) extrémités espacées, se terminant en une embouchure (22), la longueur de la lente au niveau de la première extrémité (36) étant supérieure à la longueur de la fente au niveau de la seconde extrémité (30), de sorte qu'un profil d'écoulement prédéterminé est défini à travers l'embouchure de la lente, de la première à la seconde extrémité de la fente, lors de l'application d'une pression d'entrée donnée à un liquide susceptible de s'écouler et remplissant la fente d'extrusion.

16

**4.** Le procédé selon la revendication 1, dans lequel la matrice à fente (10) est entraînée en rotation par rapport au substrat stationnaire.

**5.** Le procédé selon la revendication 1, dans lequel le substrat (1) est entraîné en rotation par rapport à la matrice à fente (10) stationnaire.

**6.** Le procédé selon la revendication 1, dans lequel le bord arrière (56) de la matrice à fente (10) est revêtu avec un matériau organique, qui n'est pas mouillé par le liquide formant un film.

**7.** Le procédé selon la revendication 1, dans lequel l'écoulement de liquide à travers la matrice (10) augmente progressivement vers le bord extérieur de la couche annulaire (E).

**8.** Le procédé selon la revendication 7, dans lequel la variation de l'écoulement à travers la matrice (10) est effectuée à l'aide d'une surface de guidage (18A), présentant une longueur diminuant progressivement, par rapport à la couche annulaire (E), vers le bord extérieur de la matrice à fente.

**9.** Le procédé selon la revendication 2, dans lequel la vitesse d'écoulement de liquide est contrôlée par une commande à boucle fermée de la pression de liquide, pour la matrice à fente (13), et la vitesse de rotation est ajustée par une commande à boucle fermée de la position du substrat (1).

**10.** Le procédé selon la revendication 9, dans lequel les valeurs de consigne des deux organes de commande (9) de pression et de vitesse de rotation sont déterminées, de façon indépendante, par la position du substrat.

**11.** Le procédé selon la revendication 2, dans lequel la hauteur de fluide située dans la matrice à fente, à la fin du cycle de revêtement, est ajustée grâce à la commande à boucle fermée de la pression de liquide.

**12.** Le procédé selon la revendication 1, dans lequel le liquide formant un film est un matériau polymère susceptible de réticuler sous l'effet de la chaleur, qui est égalisé sous l'action de l'apesanteur et ensuite réticulé par chauffage ou photodurcissement.

**13.** Le procédé selon la revendication 1, comprenant en outre l'étape de commande de l'étalement de liquide sur les bords intérieur et extérieur de la couche annulaire, par une interruption continue (50, 48) sur lesdits bords de, soit une surface planaire définie par le substrat, soit une surface planaire située sur la matrice, parallèlement à la surface planaire du substrat, et adjacent à la fente de la matrice.

**14.** Le procédé selon la revendication 1, dans lequel la distance d'interstice (49) entre la surface inférieure de matrice à fente et le substrat, depuis les bords intérieur et extérieur de la couche annulaire, est supérieure à la distance d'interstice sur l'aire de revêtement, afin de réduire l'étalement du liquide de revêtement sur les bords intérieur et extérieur de la couche de revêtement annulaire (E).

**15.** Matrice à fente (10) comprenant un couple d'organes se faisant face, coopérant pour définir une zone communiquant avec une fente d'extrusion dotée de première et seconde extrémités espacées, se terminant en une embouchure, caractérisé en ce que la zone est une zone de distribution de pression (42) et la longueur de la fente d'extrusion au niveau de la première extrémité (36) est supérieure à la longueur de la fente au niveau de la seconde extrémité (24), de sorte qu'un profil d'écoulement prédéterminé est défini dans la direction transversale de l'embouchure de la fente (22), de la première à la seconde extrémité de la fente, lors de l'application d'une pression d'entrée donnée au liquide fluide remplissant la fente d'extrusion.

**Patentansprüche**

**1.** Verfahren zum freien Oberflächengießen einer dünnen ringförmigen Schicht (E) einer filmbildenden Flüssigkeit auf ein Substrat (1) mittels eines vorbestimmten laminaren Fließprofils durch einen Verteiler, während Substrat und Verteiltes eine Drehbewegung relativ zueinander ausführen, umfassend die Schritte:

a) Positionieren des Verteilers dicht über der Oberfläche des Substrats;

b) Beginnen der relativen Rotation von Verteiler und Substrat, und Fließen der Flüssigkeit durch den Verteiler auf das Substrat, so daß sich ein kontinuierlicher dünner Flüssigkeitsfilm zwischen Verteiler und Substrat bildet;

c) Fortsetzen von Rotation und Fließen der Flüssigkeit durch einen vorbestimmten Winkelabstand;

d) Stoppen des Flüssigkeitsflusses nahe dem Punkt, wo der flüssige dünne Film auf die bereits auf dem Substrat befindliche Flüssigkeitsschicht trifft; und

e) Stoppen der Rotation und Unterbrechen des Flüssigkeitskontakts zwischen Verteiler und Substrat, dadurch gekennzeichnet, daß die dünne ringförmige Schicht (E) der filmbildenden Flüssigkeit in einem einzigen Gang gebildet wird, der Verteiler ein Schlitzgießer (10) ist, der Flüssigkeitsfluß durch den Schlitzgießer (10) auf die Substratoberfläche geregelt wird durch Kontrolle des Flüssigkeitsdrucks am Auslaß (22) des Schlitzgießers in Synchronisation mit der Drehposition des Substrats (1); und sobald der Abbruch des Zyklus in Schritt (e) eintritt, die in Kontakt mit der vorderen Düsenlippe stehende Flüssigkeitsperle auf das Substrat ausgebracht wird, der Flüssigkeitsfluß aus der Düse gestoppt wird, die Düse vom Flüssigkeitskontakt mit dem Substrat genommen wird, die zu Beginn des Flusses auf das Substrat aufgebrachte Beschichtung am Ende mit Flüssigkeit überschichtet wird, und die in der Düse verbleibende Flüssigkeitsmenge kontrolliert wird, um beständiges Einsetzen des Flusses von ringförmiger Schicht zu ringförmiger Schicht sicherzustellen.

2. Verfahren nach Anspruch 1, des weiteren dadurch gekennzeichnet, daß bei Schritt (b) relative Rotation von Schlitzdüse (10) und Substrat (1) sowie Fließen der Flüssigkeit durch den Düsenschlitz gleichzeitig einsetzen; und die Rotation beschleunigt und der Flüssigkeitsfluß auf eine vorgewählte Betriebsgeschwindigkeit innerhalb eines ersten vorbestimmten Winkelabstandes verstärkt wird,

bei Schritt (c) Rotation und Flüssigkeitsfluß bei vorgewählten Betriebsgeschwindigkeiten durch einen zweiten vorbestimmten Winkelabstand fortgesetzt werden,

bei Schritt (d) die Rotationsgeschwindigkeit verändert wird auf ein höheres oder niedrigeres konstantes Niveau unter gleichzeitiger Verminderung des Flüssigkeitsflusses auf null innerhalb eines dritten vorbestimmten Winkelabstandes, um dadurch den Flüssigkeitsfluß zu stoppen, dann mit dem umgekehrten Fluß filmbildender Flüssigkeit durch die Düse begonnen wird,

bei Schritt (e) die Rotation gleichzeitig mit dem Unterbrechen des Flüssigkeitskontakts zwischen Düse (10) und Substrat (1) gestoppt wird; der Flüssigkeitskontakt rasch unterbrochen wird durch Wegführen des Schlitzgiessers (10) von der Oberfläche des (der) Substrats(e), ehe er den ersten vorbestimmten Winkelabstand wieder vollständig durchläuft; und dann der umgekehrte Fluß der filmbildenden Flüssigkeit gestoppt wird.

3. Verfahren nach Anspruch 2, wobei der Schlitzgießer (10) ein Paar sich gegenüberliegender Düsenelemente (14A, 14B) umfaßt, die in der Zusammenwirkung eine Druckverteilungszone (42) definieren, die mit einem Extrudierschlitz (20) in Verbindung steht, der in einem Abstand voneinander erste (26) und zweite (24) Enden aufweist, die in einer Mündung (22) enden, wobei die Länge des Schlitzes am ersten Ende (36) größer ist als die Länge des Schlitzes am zweiten Ende (30), so daß bei Anwendung eines gegebenen Zuführungsdrucks auf eine den Extrudierschlitz füllende, fließfähige Flüssigkeit ein vorbestimmtes Fließprofil über die Mündung des Schlitzes vom ersten zum zweiten Ende des Schlitzes definiert wird.

4. Verfahren nach Anspruch 1, wobei der Schlitzgießer (10) relativ zum stationären Substrat gedreht wird.

5. Verfahren nach Anspruch 1, wobei das Substrat (1) relativ zum stationären Schlitzgießer (10) gedreht wird.

6. Verfahren nach Anspruch 1, wobei die Hinterflanke (56) des Schlitzgießers (10) mit einem organischen Material beschichtet ist, das von der filmbildenden Flüssigkeit nicht benetzt wird.

7. Verfahren nach Anspruch 1, wobei der Flüssigkeitsfluß durch die Düse (10) hin zur äußeren Kante der ringförmigen Schicht (E) zunehmend höher wird.

8. Verfahren nach Anspruch 7, wobei die Änderung des Flusses durch die Düse (10) bewirkt wird durch Verwendung eines Führungskanals (18A) mit stetig abnehmender Länge hin zur äußeren Kante des Schlitzgießers relativ zur ringförmigen Schicht (E).

**9.** Verfahren nach Anspruch 2, wobei die Fließgeschwindigkeit der Flüssigkeit reguliert wird durch Regelkreiskontrolle des Flüssigkeitsdrucks am Schlitzgießer (13), und die Rotationsgeschwindigkeit reguliert wird durch Regelkreiskontrolle der Position des Substrats (1).

**10.** Verfahren nach Anspruch 9, wobei die Sollwerte sowohl der Druck- als auch der Rotationsgeschwindigkeitsregler (9) unabhängig voneinander durch die Position des Substrats bestimmt werden.

**11.** Verfahren nach Anspruch 2, wobei die Flüssigkeitsfront im Schlitzgießer bei Beendigung des Beschichtungszyklus mittels Regelkreiskontrolle des Flüssigkeitsdrucks geregelt wird.

**12.** Verfahren nach Anspruch 1, wobei die filmbildende Flüssigkeit ein wärmevernetzbares polymeres Material ist, das durch Stehen nivelliert und dann durch Erhitzen oder Photohärten vernetzt wird.

**13.** Verfahren nach Anspruch 1, des weiteren umfassend den Schritt der Kontrolle des Flüssigkeitsauftrags an Innen- und Außenkante der ringförmigen Schicht mit Hilfe einer durchgehenden Trennung (50, 48) an diesen Kanten entweder anhand einer durch das Substrat definierten planaren Oberfläche oder einer planaren Oberfläche an der Düse parallel zu der dem Düsenschlitz angrenzenden planaren Oberfläche des Substrats.

**14.** Verfahren nach Anspruch 1, wobei der lichte Abstand (49) zwischen Düsenschlitzunterseite und Substrat von Innen- und Außenkante der ringförmigen Schicht größer ist als der lichte Abstand über der Auftragfläche, um den Auftrag der Beschichtungsflüssigkeit an Innen- und Außenkante der ringförmigen Schicht (E) zu vermindern.

**15.** Schlitzgießer (10), umfassend ein Paar sich gegenüberliegender Elemente, die in der Zusammenwirkung eine Zone definieren, die mit einem Extrudierschlitz in Verbindung steht, der in einem Abstand voneinander erste und zweite Enden aufweist, die in einer Mündung enden, dadurch gekennzeichnet, daß die Zone eine Druckverteilungszone (42) ist, und die Länge des Extrudierschlitzes am ersten Ende (36) größer ist als die Länge des Schlitzes am zweiten Ende (24) so daß bei Anwendung eines gegebenen Zuführungsdrucks auf eine den Extrudierschlitz füllende, fließfähige Flüssigkeit ein vorbestimmtes Fließprofil über die Mündung des Schlitzes (22) vom ersten zum zweiten Ende des Schlitzes definiert wird.

# Fig. 1

Fig. 2

## Fig. 3

## Fig. 4